# EUROPEAN PATENT SPECIFICATION

(11) **EP 0 440 445 B1**
(45) Date of publication and mention of the grant of the patent: **19.06.1996**
(21) Application number: 91300717.5
(22) Date of filing: 30.01.1991
(51) Int. Cl.: G06F 12/06

(54) **System memory initialization with presence detect encoding**
Systemspeicherinitialisierung mit Anwesenheitserkennungskodierung
Initialisation de mémoire de système avec codage de la détection de présence

(30) Priority: 31.01.1990 US 472067
(43) Date of publication of application: 07.08.1991
(73) Proprietor: Hewlett-Packard Company, Palo Alto, California 94304 (US)
(72) Inventor: Jones, Irvin R., San Jose, California 95112 (US); Lang, Marilyn J., Milpitas, California 95035 (US); Stelter, Wesley H., San Bruno, California 94066 (US)
(74) Representative: Colgan, Stephen James

(56) References cited:
- EP-A- 0 224 877
- IBM TECHNICAL DISCLOSURE BULLETIN. vol. 29, no. 3, August 1986, NEW YORK US page 1381; 'MEMORY PRESENCE DETECT '
- IBM TECHNICAL DISCLOSURE BULLETIN. vol. 31, no. 12, May 1989, NEW YORK US pages 213 - 216; 'DYNAMIC SELF-CONFIGURATION FOR MEMORY CARDS ARRANGEMENT '
- BYTE MAGAZINE November 1989, ST.PETERSBOROUGH,US pages 93 - 98; N.BARAN: 'EISA Arrives'

## Description

### BACKGROUND OF THE INVENTION

### I. FIELD OF THE INVENTION

This invention relates to the system memory in a microcomputer, and more particularly, to the initialization of the system memory in a microcomputer.

### II. RELATED ART

The system memory in microcomputer architectures commonly uses dynamic random access memory (DRAM) units. Although DRAM units are slower than other types of memory, such as static random access memory (SRAM), DRAM units are preferred by the designers of microcomputers because DRAM units strike the best balance among considerations including cost, performance, and memory capacity.

Recently, electronics manufacturers, such as Toshiba and Mitsubishi, have developed a 72-pin single in-line memory module (SIMM), which carries a varying number of DRAM units. These 72-pin SIMMs, which resemble small circuit boards, are the de facto industry standard. The SIMMs are 36 information bits wide, with 32 bits of data and 4 bits of parity.

As mentioned, the SIMMs carry memory of varying capacities, including 1, 2, 4, and 8 Megabytes (MB) of data. The DRAMs situated on the SIMMs presently can have a memory configuration of 1 Megabyte (MB) by 36 bits or 256 Kilobyte (Kb) by 36 bits. Presently, single density SIMMs as they are called are commonly manufactured with a total memory capacity of 1 Megabyte (carrying one DRAM bank of 256 Kb by 36 bits) or 4 Megabytes of DRAM (carrying one DRAM bank of 1 MB by 36 bits).

Double density (DD) SIMMs as they are referred to by those persons skilled in the art comprise the DRAM capacity of two single density SIMMs on only one SIMM. The two DRAM banks share common write enable (WE), address, data, and column address strobe (CAS), but not row address strobe (RAS). Consequently, double density SIMMs presently are manufactured with a memory capacity of either 2MB (2 times 1MB) or 8MB (2 times 4MB).

Further, each SIMM is equipped with 4 unused pins which can be used to decipher the internal DRAM content of the SIMM device. The 4 pins on a particular size of SIMM has a unique combination of the logical states including ground (GRD) and not connected (NC), which distinguishes it from the other sizes of SIMMs. Thus, the DRAM memory size on a SIMM, whether it be single or double density, as well as other information, such as the DRAM speed, can be determined from analyzing the logical states of these pins.

In a microcomputer, the system memory (which, for example, can be made up exclusively of SIMMs) is controlled by a hardware device known as a memory controller. Upon receipt of signals from the central processing unit, or in this case a microprocessor, the memory controller performs the data transfers between the system memory and the microprocessor.

All memory controllers must be aware of the specific memory configuration in order to generate proper control signals for the memory. This memory configuration information traditionally has been obtained by the memory controller in several different ways. One conventional way is that the information may be physically set by the user on external switches situated on the memory board or at some other appropriate location. The configuration information is then read from the switches when booting the computer during the initialization process of the system memory.

In another conventional approach, a configuration register located inside the memory controller is written with the configuration information by the BIOS (Basic Input Output System) during the initialization process. The BIOS determines the memory configuration by counting the total memory present in the system memory. The BIOS often uses a trial and error approach to do such counting. Specifically, it repeatedly writes data into the memory and then attempts to read the data back. After figuring out the memory configuration, the BIOS then usually writes the information into the register where it can be retrieved and utilized independently by the memory controller.

However, in memory systems supporting a variety of memory configurations, the conventional methods of apprising the memory controller of the configuration information have disadvantages. For example, when using external switches, the user must become intimately involved with the internal circuitry of the computer. The user, who often is computer illiterate, must properly tell the computer what memory configuration is present for the computer system to properly function. When using the conventional method of using the BIOS to ascertain the memory configuration, usually only a few configurations are permitted. This limitation is due to the requisite time consumption and complexity of the algorithm and software as more configurations are allowed.

Until the present invention, no microcomputer architecture has utilized the unused pins on industry standard SIMMs to specify to the system memory controller, during the initialization process without user interaction, the memory configuration of the entire system memory which is capable of being configured in many different ways.

### SUMMARY OF THE INVENTION

The present invention represents a significant effort on the part of the inventors over a span of many months to overcome the previously mentioned problems and deficiencies in the prior art.

One embodiment of the present invention is a microcomputer architecture and method for automatically conveying system memory configuration information to the memory controller. The architecture has a system memory made up of conventional SIMMs. The SIMMs carry DRAMs and possess unused external pins. A memory controller is connected to and controls the system memory. Further, a PAL is connected to the unused external pins and to the memory controller. The PAL determines the entire system memory configuration from the pins and communicates this information to the memory controller. As a result of the present invention, hardware is used to automatically determine the system memory configuration and convey this information to the memory controller. The BIOS and user no longer have the burden of determining this configuration information.

Yet another embodiment of the present invention is a method involving a microcomputer architecture having a memory controller in communication via a PAL with a system memory. The system memory is designed to have a number of allowable preselected memory configurations. It is comprised of SIMMs carrying DRAMs. Moreover, each of the SIMMs bears four unused pins which have a unique combination of logical states. The method comprises the steps of (a) performing a characterization test during the initialization of the system memory, and (b) performing, subsequent to the characterization test but during the initialization, a physical configuration test. The method provides for the retrieval of the system memory configuration and insures that the configuration is in accord with the preselected allowable configurations.

Further objects and advantages of the present invention will become apparent to one skilled in the art upon examination of the following drawings and detailed description. It is intended that any additional objects and advantages be incorporated herein.

### BRIEF DESCRIPTION OF THE DRAWINGS

The present invention as defined in the claims can be better understood with reference to the text and to the following drawings.
Figure 1 illustrates a high level block diagram representation of the present invention;
Figure 2 shows a specific embodiment of the present invention having a microprocessor 202 and a system memory 110;
Figure 3 shows Table A which lists the data specifications of the unused pins for industry standard SIMMs manufactured by the Toshiba Corporation;
Figure 4 illustrates Table B which lists the possible system memory configurations when using single density SIMMs;
Figure 5 shows Table C which contains the allowable system memory configurations when using double density SIMMs;
Figure 6 contains Tables D, E, and F which indicate the encoding of the various bits of the 6-bit control signal on control line 120;
Figure 7 contains Tables G, H, and I which indicate the encoding of the various bits of the present port 223 and the characterization port 225 within the ASIC memory controller 112;
Figure 8 illustrates a high level block diagram representation of a method of the present invention for determining the system memory configuration and comparing it to a preselected number of allowable configurations;
Figure 9 contains Table J which is the state table for the state machine which implements the physical configuration test; and
Figure 10 shows the state diagram for the state machine of Figure 9.

### DESCRIPTION OF PREFERRED EMBODIMENT

### I. PRESENCE DETECT ENCODING

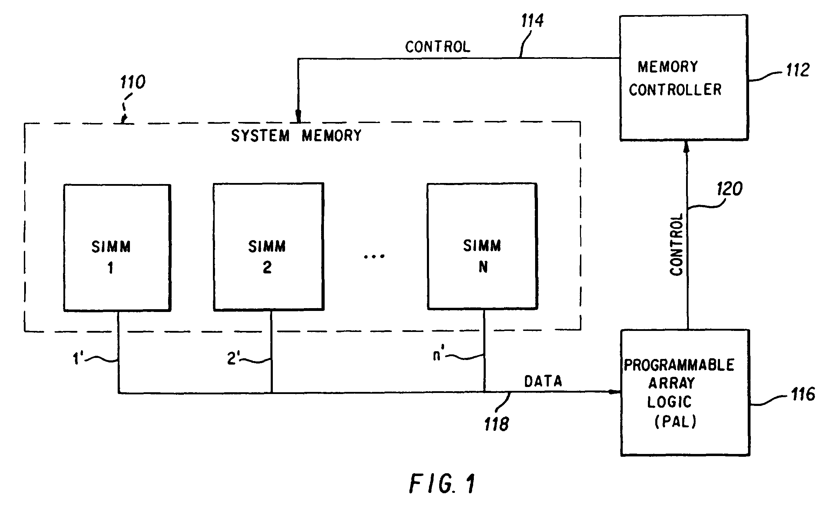

Figure 1 illustrates the preferred embodiment of the present invention. A microcomputer architecture utilizes presence detect outputs 1' to n' from the unused external pins of the respective SIMMs 1 to N in a system memory 110 to convey to the system memory controller 112 the system memory configuration. Moreover, each of the SIMMs 1 to N can contain one of X different kinds of SIMMs. Thus, there are N to the power of X different system memory configurations. Configuration in the context of this document refers to the kind and quantity of memory.

The microcomputer architecture has the system memory 110 operating under the control of the memory controller 112 via a control bus 114. The system memory 110 has a number of presence detect outputs 1', 2', ..., and n' originating from the respective SIMMs 1, 2, ..., and N. The presence detect outputs on each SIMM can be used to identify the memory configuration on each of the individual SIMMs.

The presence detect outputs 1' to n' are channeled to form a data bus 118 which communicates to a programmable array logic (PAL) 116. At the PAL 116, the information encoded on the presence detect outputs 1' to n' is translated by logic circuitry into a control signal representing the entire system memory configuration. After the logical manipulation at PAL 116, the control signal is sent from the PAL 116 to the memory controller 112 through control bus 120.

Hence, the microcomputer architecture of the present invention utilizes the presence detect outputs 1' to n' on the SIMMs 1 to N in order to specify the memory configuration of the system memory 110 to the system memory controller 112. As a result of the microcomputer architecture of the present invention, user interaction is minimized; the user need not set external switches pertaining to the specific memory configuration. Furthermore, the BIOS need not be designed to figure out the configuration and subsequently write information in a register where the memory controller may retrieve it. Fast and simply-designed hardware accomplishes the tasks of determining the configuration and informing the memory controller 112 during the initialization of the system memory 110.

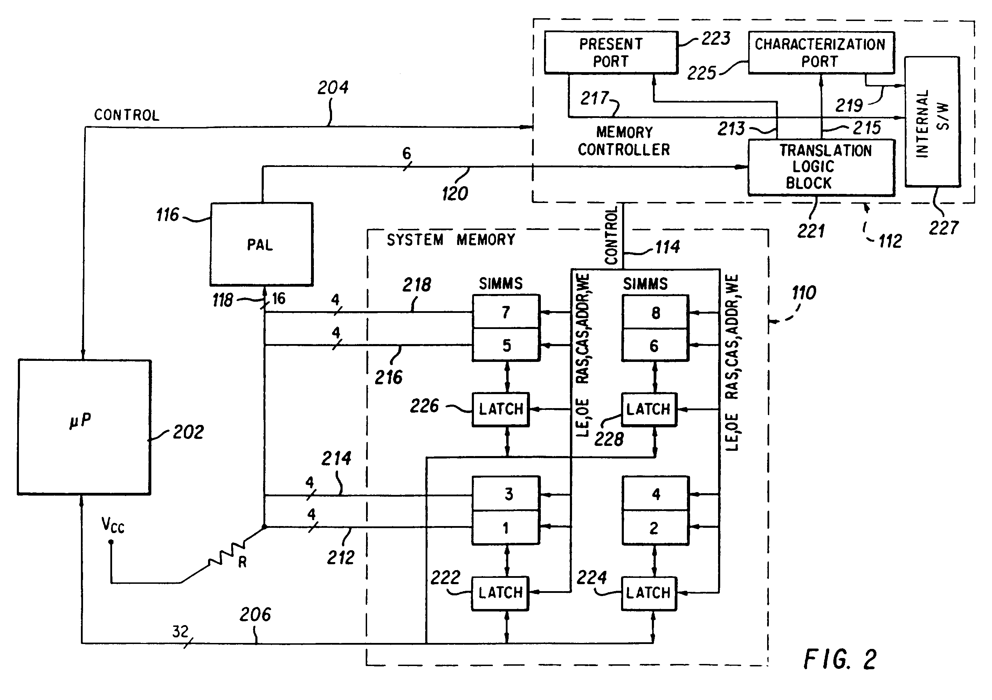

Figure 2 shows a more detailed representation of a preferred embodiment of the present invention. A microprocessor 202 controls the memory controller 112 through a control line 204. The system memory 110 operating under the control of the memory controller 112, provides data to the microprocessor 202 through a 32-bit host data bus 206. Further, the system memory 110 is comprised of SIMMs situated on SIMM slots 1 to 8.

The SIMMs utilized in the preferred embodiment are industry-standard (de facto) 72-pin SIMMs containing dynamic random access memory (DRAM) banks. The SIMMs can take any of four different memory storage capacities in the preferred embodiment, including 1, 2, 4, and 8 Megabyte (MB). Moreover, the SIMMs are at present manufactured by the Mitsubishi Corporation of Japan or by the Toshiba Corporation of Japan.

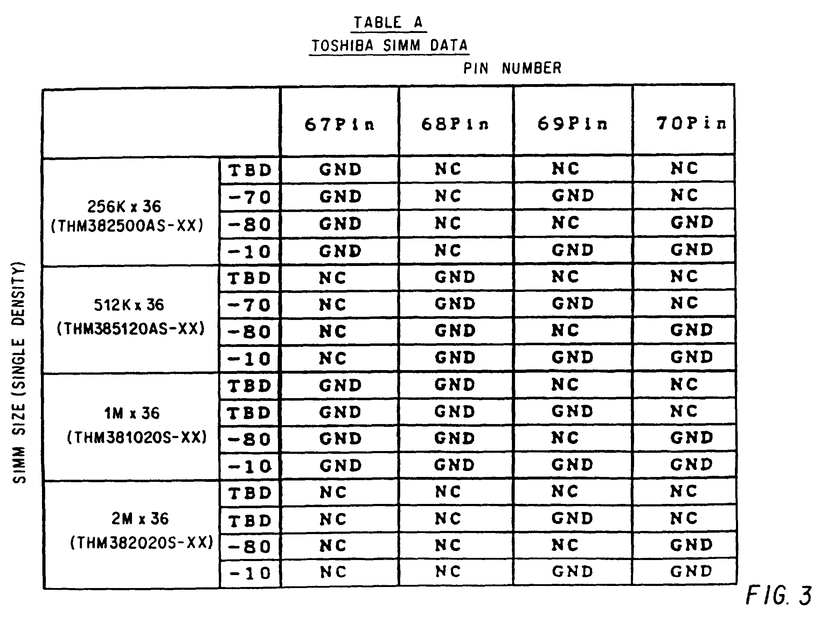

Table A of Figure 3 lists a number of different single density SIMMs manufactured by the Toshiba Corporation which can be used in the present invention. The vertical axis of Table A lists the memory capacity of the SIMM along with its Toshiba part number. The horizontal axis of Table A is a listing of the corresponding logical states of the external pins #67-70, from which the presence detect outputs 212, 214, 216, and 218 are derived. In Table A, the SIMMs selected for installment in the preferred embodiment are those, for example, with memory capacities of 256 Kb by 36 bits and 1MB by 36 bits and with a speed of 80 nanoseconds.

Worth noting is that the SIMMs situated on the SIMM slots 1-8 may be a mixture of SIMMs from different manufacturers so long as the row address strobe (RAS) time, the column address strobe (CAS) time, refresh time, and other timing requirements are comparable.

In order to give the pins #67-70 logical meaning, a resistor R, or so-called pull-up resistor, connects the pins to a direct voltage source VCC. In the preferred embodiment, a 10 kiloohm resistor connects each of the pins to a 5 volt direct current source. Accordingly, if the pin is not connected (NC) as indicated in Table A, then the result will be a logical high. Further, if the pin is at ground potential, a logical low will be the result.

Referring again to Figure 2, the system memory 110 is organized into 4 pairs of SIMM slots. The SIMM pairs are as follows: 1,2 and 3,4 and 5,6 and 7,8. Each SIMM slot holds one or two banks of DRAM depending on whether a single or a double density SIMM is used.

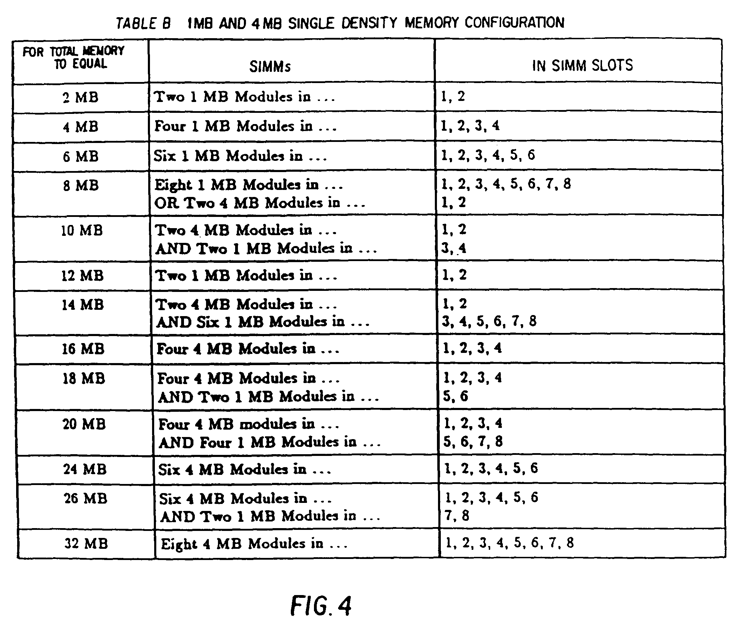

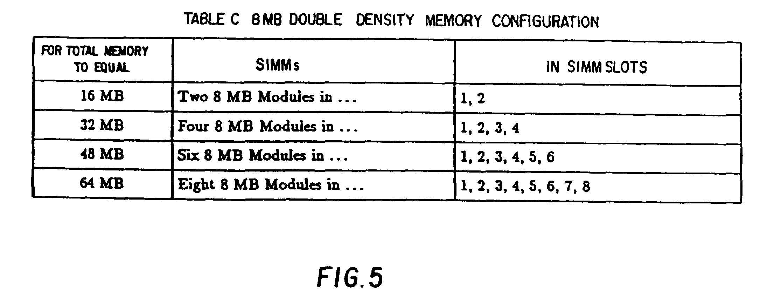

The possible SIMM configurations are restricted for reasons later discussed. The different ways in which the four varieties of SIMMs can be physically situated on the SIMM slots 1-8 is limited to 17 in number. The different configurations are shown in Table B of Figure 4 and Table C of Figure 5.

The Tables B and C reflect the following requirements: (1) all SIMMs in the system memory 110 must be either single density or all must be double density; (2) the SIMM slots 1-8 must be filled in pair increments of the pairs previously mentioned (1,2 and 3,4 and 5,6 and 7,8); and (3) the lower numbered SIMM slots must be filled first. Table B shows the allowable configurations when using single density SIMMs. Table C lists the allowable configurations when using double density SIMMs. Finally, to insure adherence to these requirements, software during the system memory initialization process checks the memory configurations as is discussed in detail below.

Without requirements number (1) and (2) above, all of the presence detect outputs from pins #67-70 from each of the SIMMs on SIMM slots 1-8 would need to be monitored in order to decipher the system memory configuration. Accordingly, 32 (8 times 4) presence detect outputs would need to be observed. To reduce this number, users are required to add or upgrade the system memory 110 in increments of SIMM pairs of the same type. As a result, only the presence detect outputs of half of the total SIMM slots, or 16 outputs, are monitored by the PAL 116 because the architecture assumes that the unmonitored SIMM of each pair is identical to the first. Hence, SIMM slots 1, 3, 5, and 7 (odd slots) each have four presence detect outputs 212, 214, 216, and 218, which are combined in parallel to form data bus 118. SIMM slots 2, 4, 6, and 8 (even slots) are left unmonitored.

The requirements of (1) and (3) above are further imposed for reasons, including system memory speed, simplicity of the address decoding, and DRAM bank selection logic. However, because of these requirements which are reflected in the allowable system memory configurations of Tables B and C, the 17 allowable configurations are encoded into 6 bits in the preferred embodiment by PAL 116 and sent onto control bus 120.

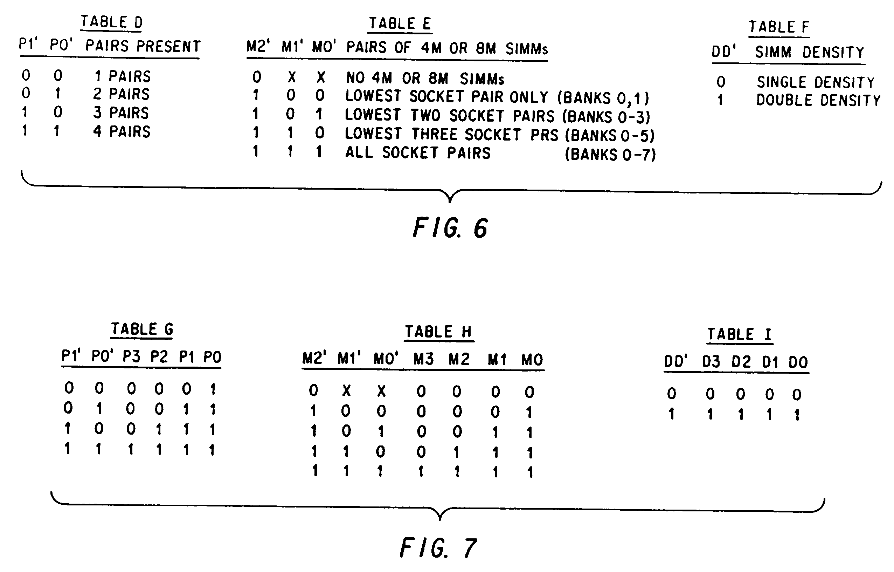

The 6 bits are as follows: P0', P1', M0', M1', M2', and DD'. These 6 bits specify (1) which of the SIMM slot pairs are occupied by SIMMs, (2) which of the SIMMs are 4 or 8 Megabytes, and (3) which of the SIMMs are single and double density. An alternate embodiment of the present invention encodes the same information into 4 bits. The 6 bits of the best mode are encoded as illustrated in Tables D-F of Figure 6.

The memory controller 112 is an application specific integrated circuit (ASIC) in the preferred embodiment. It takes the 6 bits P0', P1', M0', M1', M2', and DD' from control bus 120 and internally translates them by simple logic in translation logic block 221 into 12 bits, namely, P0, P1, P2, P3, M0, M1, M2, M3, D0, D1, D2, and D3, for operation by the internal software 227 of the memory controller 112. The logic of translation logic block 221 is reflected in Tables G-I of Figure 7.

The 12 bits from translation logic block 221 are sent to two ports, namely the SIMM present port 223 and the SIMM characterization port 225, through respective lines 213 and 215. The present port 223 is sent four read only bits, the presence information bits P0, P1, P2, and P3, through line 213. Each bit corresponds to a SIMM slot pair. The bit for each SIMM pair is set at a logical high when the SIMM is installed in the SIMM slot; otherwise, the state of the bit is at low logic level.

The SIMM characterization port 225 is sent 8 read-only bits, namely the SIMM characterization bits M0, M1, M2, M3, D0, D1, D2, and D3, through line 215. Each pair of bits, M0-D0, M1-D1, M2-D2, and M3-D3, indicates the part type (either 1 MB or 4 MB) and density (either single or double) of the SIMMs. Bits D0-D3 indicate the SIMM density, whereas bits M0-M3 indicate the part type. The density bit D is set to identify a double density SIMM at a high logic level. The part type bit M is set to identify a 4 MB SIMM at high logic level.

### II. SYSTEM MEMORY INITIALIZATION

In order for the memory controller 112 to retrieve the system memory configuration and to insure that the configuration is in accord with those configurations permitted in Tables B and C, internal software 227 is implemented in the preferred embodiment to sample the bits of the present port 223 and the characterization port 225 during the initialization of the system memory 110. The internal logic 227 reads the bits in the present port 223 via line 217. Further, the internal logic 227 reads the bits in the characterization port 225 through line 219.

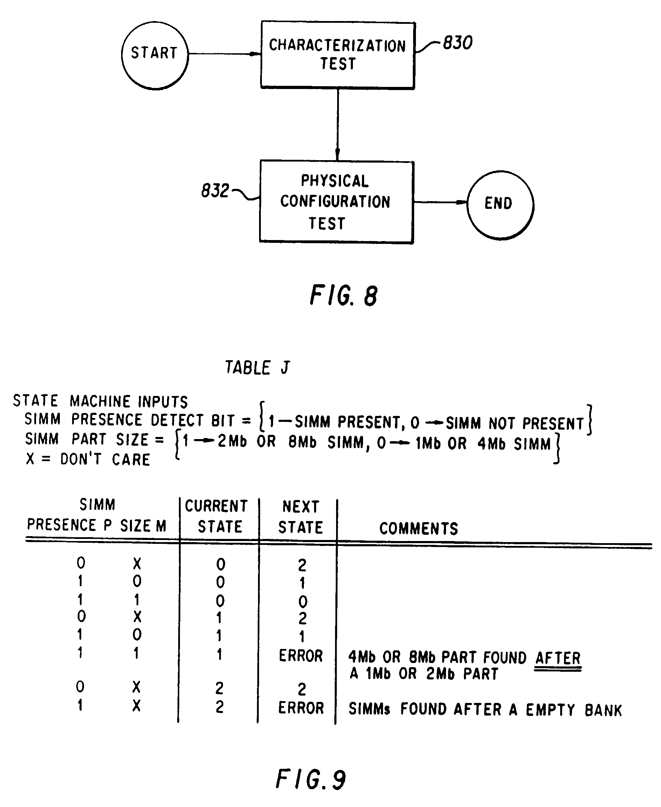

The initialization can be performed in two successive steps as shown in Figure 8. First, a characterization test 830 is instituted. Second, a physical configuration test 832 is performed.

### A. Characterization Test

The characterization test 830 determines whether and where SIMMs exist in each of the SIMM slots 1-8, and whether the SIMMs are all properly of the same density in accordance with requirement (3). To check for the existence of SIMMs in the system memory 110, the four bits in the memory characterization port 225 are checked for a nonzero value. If any of the four bits have a nonzero value, then the system memory 110 has at least some memory. If this test fails to identify any installed memory, the initialization sequence is aborted. In the preferred embodiment, the computer system continues to boot until the BIOS verifies that no memory exists, and then the system boot procedure is aborted.

To test whether all SIMMs are single density, the SIMM presence bit corresponding to each SIMM slot pair and the SIMM density bit for each SIMM slot pair are sent through a logical AND gate (not shown). If the result is a logical low, then all of the SIMMs installed are single density. If the result is a logical high, then it is assumed that all SIMMs are double density.

A further test is envisioned for determining whether all the SIMMs are in fact double density without making the previous assumption. To test whether all SIMMS are double density, the SIMM presence bit for each SIMM slot pair and the logical inverse of the state of the SIMM density bit for each SIMM slot pair could be inputted through a logical AND gate (not shown). If the result is a logical low, then all the SIMMs installed are double density. If the result is a logical high, then SIMM density types have been mixed. Subsequently, an error code is displayed to the user because requirement (1) has not been met.

### B. Physical Configuration Test

The physical configuration test 832 insures that the ordering of the SIMMs with respect to size is in accordance with requirements (1) and (3).

Recall that four varieties of SIMMs can be utilized in the preferred embodiment. Single density SIMMs are manufactured in 1 MB and 4 MB sizes. Double density SIMMs are manufactured in 2 MB and 8 MB. As a result of the many varieties of SIMMs, the addressing structure of the system memory 110 is somewhat complex. Based on the size and the density of the SIMMs in a SIMM slot pair, only a certain number of address lines for each pair are activated. It is therefore very important that the SIMM density be kept uniform and that the SIMM ordering with respect to SIMM size be followed as indicated in Tables B and C.

For the system memory 110, there are 4 SIMM pairs and 5 different types of SIMMs (which could have vacant SIMM slots). This means there are 1024 different system memory configurations (4 to the 5th power). Since density homogeneity was tested for earlier under the SIMM characterization test, the number of memory configurations which must be validated, pending no memory density violation, is 4 to the 3rd power, or 64 configurations.

The SIMMs are ordered starting with SIMM pair 1,2. A valid memory configuration is one where the amount of memory in a SIMM pair which follows another SIMM pair must be less than or equal to the amount of memory in the preceding SIMM pair. SIMM pair 1,2 is an exception because it does not follow any other SIMM pair.

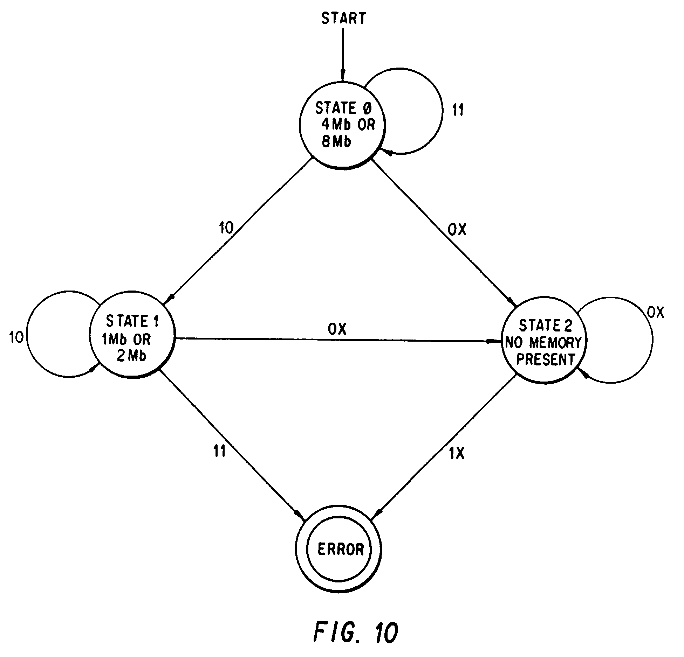

The test for valid ordering is a finite state machine implemented in internal software 227. The state table, or Table J, is Figure 9. The corresponding state diagram is shown at Figure 10.

Referring to Table J, the state machine inputs two pieces of information: the SIMM presence bit P for each SIMM pair, and the SIMM size bit M for each SIMM pair. The logical state of the SIMM size bit M is high when the size is either a 4MB or 8MB SIMM (depending on the density), or low when the size is either a 1MB or 2MB SIMM (depending on the density).

Referring now to Figure 10, the state machine with four states was generated based on the number of inputs. Starting with SIMM pair 1,2, the presence and size bits are evaluated. A move is then made to the appropriate next state, which signifies the amount of memory in that SIMM pair. The next SIMM pair is evaluated in the same manner as the first, but from the current state of the state machine. A move to the error state occurs under two conditions: (1) if a SIMM pair filled with 4MB or 8MB SIMMs is detected following a SIMM pair filled with 1MB or 2MB SIMMs; or (2) if a SIMM pair where the SIMM presence was detected follows a SIMM pair where no SIMMs were detected.

When an error occurs, an error code is displayed to the user on the microcomputer screen along with a number denoting the SIMM slot where the state machine encountered the error. The steps taken to correct the configuration error are left to the user.

## Claims

1. A system adapted for use with a microcomputer for automatically conveying system memory configuration information to a memory controller (112), the system comprising:
(i) a system memory (110) having a plurality of single-in-line memory modules SIMM 1 - SIMM N) organised into a plurality of SIMM slots (1,2; 3,4; 5,6; 7,8) each of said SIMMs (SIMM 1 - SIMM N) having a set of unused external pins for indicating logical states pertaining to the memory configuration of that particular SIMM; and
(ii) a programmable array logic PAL (116) which monitors the sets of said unused external pins and which translates said logical states into a control signal encoding the entire system memory configuration;
(iii) said memory controller (112) controlling said system memory (110) as a result of receiving and utilizing the encoded system memory configuration information from said PAL (116).

2. The system according to Claim 1, wherein said SIMMs (SIMM 1 - SIMM N) are of the same memory density.

3. The system according to Claim 1, wherein said SIMM slots (1,2; 3,4; 5,6; 7,8) are filled in pair increments.

4. The system according to Claim 3, wherein said PAL (116) monitors only the set of unused external pins of one SIMM slot (1,2; 3,4; 5,6; 7,8) in each said pair.

5. The system according to any of the preceding Claims, wherein there are four of said unused external pins in each of said SIMMs (SIMM 1 - SIMM N).

6. The system according to any of the preceding Claims, wherein said system memory (110) comprises any positive integer of SIMMs up to 8.

7. The system according to Claim 1, wherein the system memory configuration information relates to the DRAM memory capacity of each particular memory module (SIMM 1 - SIMM N).

8. The system according to Claim 7, wherein said system memory configuration information includes the speed of said DRAMs.

9. The system according to Claim 1, wherein said system memory (110) comprises up to 17 different memory capacities.

10. A method of automatically conveying system memory configuration information to a memory controller (112) in a microcomputer system, said memory troller (112) communicating with a system memory (110) via a programmable array logic PAL (116), the system memory having a plurality of single-in-line memory modules (SIMM 1 - SIMM N) organised into a plurality of SIMM slots (1,2; 3,4; 5,6; 7,8), each of said SIMMs (SIMM 1 - SIMM N) having a set of unused external pins for indicating logical states pertaining to the memory configuration of that particular SIMM, the method comprising the steps of:
(a) using said PAL (116) to monitor the logical states on said sets of unused pins;
(b) using said PAL (116) to translate said logical states into a control signal encoding the entire system memory configuration; and
(c) transmitting the encoded information from said PAL (116) to said memory controller (112) which thereby utilizes said encoded system memory configuration information for controlling said system memory (110).

## Patentansprüche

1. Ein System, das zur Verwendung mit einem Mikrocomputer angepaßt ist, zum automatischen Liefern von Systemspeicherkonfigurationsinformationen zu einer Systemsteuerung (112), mit folgenden Merkmalen:
(i) einem Systemspeicher (110) mit einer Mehrzahl von Speichermodulen mit einseitig angeordneten Kontaktstellen (SIMM 1 - SIMM N), die in einer Mehrzahl von SIMM-Einbauplätzen (1, 2; 3, 4; 5, 6; 7, 8) organisiert sind, wobei jedes der SIMMs (SIMM 1 - SIMM N) eine Anzahl von nicht verwendeten äußeren Anschlußstiften zum Anzeigen von logischen Zuständen aufweist, die sich auf die Speicherkonfiguration dieses speziellen SIMMs beziehen; und
(ii) einer programmierbaren Arraylogik PAL (116), welche die Sätze der nicht benutzten äußeren Anschlußstifte überwacht, und welche die logischen Zustände in ein Steuerungssignal übersetzt, das die gesamte Systemspeicherkonfiguration codiert;
(iii) wobei die Systemsteuerung (112) den Systemspeicher (110) als Ergebnis des Empfangens und Verwendens der codierten Systemspeicherkonfigurationsinformationen von dem PAL (116) steuert.

2. Das System gemäß Anspruch 1, bei dem die SIMMs (SIMM 1 - SIMM N) die gleiche Speicherdichte aufweisen.

3. Das System gemäß Anspruch 1, bei dem die SIMM-Einbauplätze (1, 2; 3, 4; 5, 6; 7, 8) in Paarinkrementen gefüllt sind.

4. Das System gemäß Anspruch 3, bei dem die PAL (116) nur den Satz nicht benutzter äußerer Anschlußstifte eines SIMM-Einbauplatzes (1, 2; 3, 4; 5, 6; 7, 8) in jedem Paar überwacht.

5. Das System gemäß einem beliebigen der vorhergehenden Ansprüche, bei dem vier der nicht benutzten äußeren Anschlußstifte in jedem der SIMMs (SIMM 1 - SIMM N) existieren.

6. Das System gemäß einem beliebigen der vorhergehenden Ansprüche, bei dem der Systemspeicher (110) eine beliebige positive Ganzzahl von SIMMs bis zu 8 aufweist.

7. Das System gemäß Anspruch 1, bei dem sich die Systemspeicherkonfigurationsinformationen auf die DRAM-Speicherkapazität jedes einzelnen Speichermoduls (SIMM 1-SIMM N) beziehen.

8. Das System gemäß Anspruch 7, bei dem die Systemspeicherkonfigurationsinformationen die Geschwindigkeit der DRAMs aufweisen.

9. Das System gemäß Anspruch 1, bei dem der Systemspeicher (110) bis zu 17 verschiedene Speicherkapazitäten aufweist.

10. Ein Verfahren zum automatischen Liefern von Systemspeicherkonfigurationsinformationen zu einer Speichersteuerung (112) in einem Mikrocomputersystem, wobei die Speichersteuerung (112) mit einem Systemspeicher (110) über eine programmierbare Arraylogik PAL (116) in Verbindung steht, der Systemspeicher eine Mehrzahl von Speichermodulen mit einseitig angeordneten Kontaktstellen (SIMM 1 - SIMM N) aufweist, die in einer Mehrzahl von SIMM-Einbauplätzen (1, 2; 3, 4; 5, 6; 7, 8) organisiert sind, jedes der SIMMs (SIMM 1 - SIMM N) eine Anzahl von nicht benutzten äußeren Anschlußstiften zum Anzeigen von logischen Zuständen aufweist, die sich auf die Speicherkonfiguration dieses speziellen SIMMs beziehen, und das Verfahren folgende Schritte aufweist:
(a) Verwenden der PAL (116), um die logischen Zustände der Sätze von nicht benutzten Anschlußstiften zu überwachen;
(b) Verwenden der PAL (116), um die logischen Zustände in ein Steuerungssignal zu übersetzen, das die gesamte Systemspeicherkonfiguration codiert; und
(c) Übertragen der codierten Informationen von der PAL (116) zu der Speichersteuerung (112), welche dadurch die codierten Systemspeicherkonfigurationsinformationen zum Steuern des Systemspeichers (110) verwendet.

## Revendications

1. Système adapté pour être utilisé avec un micro-ordinateur, pour acheminer automatiquement des informations de configuration de mémoire du système vers un contrôleur de mémoire (112), le système comprenant:
(i) une mémoire de système (110) ayant une pluralité de modules de mémoire disposés en ligne unique (SIMM 1 - SIMM N), organisés dans une pluralité de fentes pour SIMMs (1,2; 3,4; 5,6; 7,8), chacun desdits SIMMs (SIMM 1 - SIMM N) comportant un ensemble de broches externes inutilisées, pour indiquer les états logiques concernant la configuration de mémoire de ce SIMM particulier; et
(ii) un réseau logique programmable PAL (116), qui surveille les ensembles desdites broches externes inutilisées, et qui traduit lesdits états logiques en un signal de commande, codant toute la configuration de mémoire du système;
(iii) ledit contrôleur de mémoire (112) commandant ladite mémoire du système (110) en conséquence de la réception et de l'utilisation des informations de configuration codée de mémoire du système provenant dudit PAL (116).

2. Système selon la revendication 1, dans lequel lesdits SIMMs (SIMM 1 - SIMM N) sont de la même densité de mémoire.

3. Système selon la revendication 1, dans lequel lesdites fentes les pour SIMMs (1,2; 3,4; 5,6; 7,8) sont remplies par incréments de paires.

4. Système selon la revendication 3, dans lequel ledit PAL (116) ne surveille que l'ensemble de broches externes inutilisées d'un réceptacle pour SIMM (1,2; 3,4; 5,6; 7,8) de chaque dite paire.

5. Système selon l'une quelconque des revendications précédentes, dans lequel il existe quatre desdites broches externes inutilisées dans chacun desdits SIMMs (SIMM 1 - SIMM N).

6. Système selon l'une quelconque des revendications précédentes, dans lequel ladite mémoire du système (110) comprend un entier positif quelconque des SIMMs allant jusqu'à 8.

7. Système selon la revendication 1, dans lequel lesdites informations de configuration de mémoire concernent la capacité en mémoires DRAM de chaque module de mémoire particulier (SIMM 1 - SIMM N).

8. Système selon la revendication 7, dans lequel lesdites informations de configuration de mémoire du système comportent la vitesse desdites DRAM.

9. Système selon la revendication 1, dans lequel ladite mémoire du système (110) comprend jusqu'à 17 capacités en mémoires différentes.

10. Procédé d'acheminement automatique d'informations de configuration de mémoire de système vers un contrôleur de mémoire (112), dans un système de micro-ordinateur, ledit contrôleur de mémoire (112) communiquant avec une mémoire de système (110) par l'intermédiaire d'un réseau logique programmable PAL (116), la mémoire du système ayant une pluralité de modules de mémoire disposés en ligne unique (SIMM 1 - SIMM N), organisés dans une pluralité de fentes pour SIMMs (1,2; 3,4; 5,6; 7,8), chacun desdits SIMMs (SIMM 1 - SIMM N) comportant un ensemble de broches externes inutilisées, pour indiquer les états logiques concernant la configuration de mémoire de ce SIMM particulier, le procédé comprenant les étapes suivantes:
(a) utilisation dudit PAL (116) pour surveiller les états logiques desdits ensembles de broches inutilisées;
(b) utilisation dudit PAL (116) pour traduire lesdits états logiques en un signal de commande, codant toute la configuration de mémoire du système; et
(c) transmission des informations codées dudit PAL (116) vers ledit contrôleur de mémoire (112) qui utilise ainsi lesdites informations de configuration codée de mémoire du système, pour commander ladite mémoire du système (110).
